# EUROPEAN PATENT APPLICATION

(11) **EP 2 182 681 A1**
(43) Date of publication of application: **05.05.2010**
(21) Application number: 08792562.4
(22) Date of filing: 20.08.2008
(51) Int. Cl.: H04L 12/56

(54) **TRANSMISSION METHOD AND MOBILE STATION**

(30) Priority: 20.08.2007 JP 2007214158
(71) Applicant: NTT DoCoMo, Inc., Chiyoda-ku Tokyo 100-6150 (JP)
(72) Inventor: HAPSARI, Wuri Andarmawanti c/o NTT DoCoMo Inc., 2-chome, Chiyoda-ku, Tokyo 100-6150 (JP); MOTEGI, Masayuki c/o NTT DoCoMo Inc., 2-chome, Chiyoda-ku, Tokyo 100-6150 (JP); ISHII, Minamii c/o NTT DoCoMo Inc., 2-chome, Chiyoda-ku, Tokyo 100-6150 (JP); KATO, Yasuhiro c/o NTT DoCoMo Inc., 2-chome, Chiyoda-ku, Tokyo 100-6150 (JP)
(74) Representative: HOFFMANN EITLE
(86) International application number: PCT/JP2008/064791
(87) International publication number: WO 2009/025282

(57) **Abstract**

A transmission according to the present invention includes: (A) determining a maximum allowable data size for an uplink user IP packet in accordance with a type of a transmission path connected to a radio base station (60), and notifying a mobile station (70) of the maximum allowable data size; (B) generating, at the mobile station (70), an upper layer data unit which size is not more than the notified maximum allowable data size; (C) generating, at the mobile station (70), an uplink user IP packet including the generated upper layer data unit, generating radio communication data including the generated uplink user IP packet, and transmitting the radio communication data to the radio base station (60); and (D) generating, at the radio base station (eNB), wired transmission data including the uplink user IP packet, and transmitting the wired transmission data to an upper node.

## Description

### TECHNICAL FIELD

The present invention relates to a transmission method and a mobile station.

### BACKGROUND ART

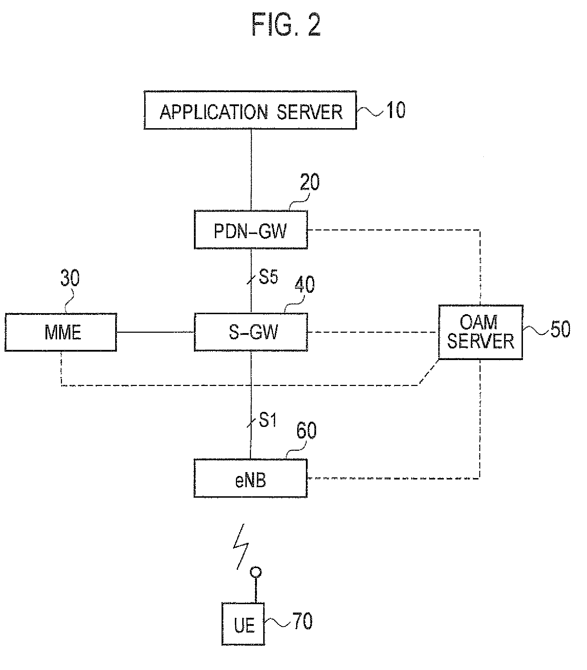

Fig. 2 shows a schematic configuration of a radio communication system of the LTE (Long Term Evolution) standard defined in the 3GPP (3rd Generation Partnership project).

In the radio communication system, "Giga Ethernet (registered trademark)" is generally used as a data link layer protocol in a transmission path (S5 interface, for example) upward of a mobility control device (MME: Mobility Management Entity) 30 and a serving gateway (S-GW: Serving-Gateway) 40.

On the other hand, it is often the case where "Fast Ethernet (registered trademark)" is used as a data link layer protocol in a transmission path (S1 interface, for example) downward of the MME 30 and the S-GW 40.

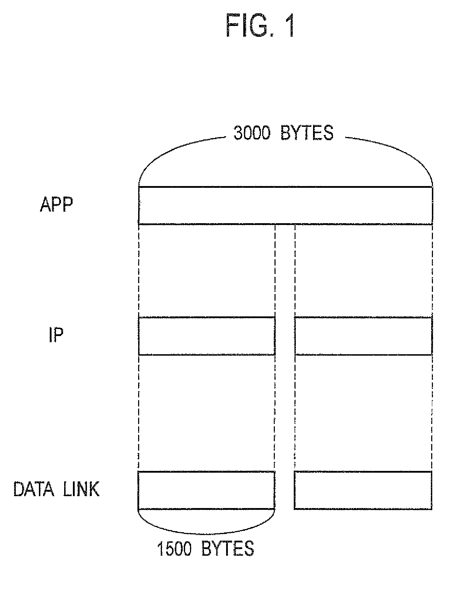

Here, consider a case where "Fast Ethernet (registered trademark)" is used in a wired transmission path between a radio base station (eNB) 60 and the serving gateway (S-GW: Serving-Gateway) 40. In this case, a maximum allowable data size (i.e., MTU (Maximum Transmission Unit) size) of an IP packet transmittable is "1500 bytes". Accordingly, if a user IP packet generated in the IP layer of a mobile station (UE: User Equipment) 70 has a size larger than "1500 bytes" (in a case of "3000 bytes", for example) as shown in Fig. 1, the radio base station (eNB) 60 needs to execute IP fragmentation processing to divide the uplink user IP packet including an upper layer data unit in its IP layer in a way that the divided pieces of the uplink user IP packet may be each within the MTU size.

Note that, however, the execution of the IP fragmentation processing in the eNB 60 increases the processing amount of an IP packet (wired transmission data) processing card mounted on the eNB 60. This causes a problem of deteriorating the processing performance of the IP packet processing card and thus reducing the transmission speed of wired transmission data (IP packets).

Conceivable solutions of avoiding implementation of the IP fragmentation processing include "MTU Path Discovery, "MSS Clamping", and the like.

The "MTU Path Discovery" is a method of searching for a user IP packet MTU size supportable in transmission paths between the UE 70 and an application server 10.

Further, the "MSS Clamping" is a method of dividing and transmitting a TCP segment in the TCP layer of the UE 70 and the TCP layer of the application server 10.

However, the "MTU Path Discovery" has a problem of taking so much time since the UE 70 and the application server 10 are not capable of searching for the aforementioned MTU size in their application (APP) layers facing each other, and need to search for the aforementioned MTU size in their transport network layers (TNL).

Meanwhile, the "MSS Clamping" has a problem of taking so much time since the UE 70 and the application server 10 have to search for the aforementioned MTU size.
Non-Patent Document 1: 3GPP TS29.060, "GTP across Gn and Gp interface"
Non-Patent Document 2: 3GPP TS25. 414, "UTRAN lu interface data transport and transport signaling"

### DISCLOSURE OF THE INVENTION

The present invention has been therefore made in view of the aforementioned problems. An object thereof is to provide a method of transmitting an uplink user IP packet and a mobile station which are capable of efficiently searching out an MTU size supportable in transmission paths between the UE 70 and the application server 10.

A first aspect of the present invention is summarized as a transmission method in which a mobile station transmits an uplink user IP packet to a radio base station, the transmission method including the steps of: (A) determining a maximum allowable data size for the uplink user IP packet in accordance with a type of a transmission path connected to the radio base station, and notifying the mobile station of the maximum allowable data size; (B) generating, at the mobile station, an upper layer data unit which size is not more than the notified maximum allowable data size; (C) generating, at the mobile station, an uplink user IP packet including the generated upper layer data unit, generating radio communication data including the generated uplink user IP packet, and transmitting the radio communication data to the radio base station; and (D) generating, at the radio base station, wired transmission data including the uplink user IP packet, and transmitting the wired transmission data to an upper node, wherein the radio base station transmits the wired transmission data to the upper node without executing IP fragmentation processing thereon, the wired transmission data including the uplink user IP packet which size is not more than the maximum allowable data size.

In the first aspect, the step (A) can include the steps of: transmitting, at the mobile station, a first message to the radio base station connected to the mobile station, when transitioning from an idle state to an active state; transmitting, at the radio base station, a second message to a mobility control device performing mobility control on the mobile station, when receiving the first message; determining, at the mobility control device, the maximum allowable data size, and notifying the radio base station of the maximum allowable data size through a third message, when receiving the second message; and notifying, from the radio base station to the mobile station, the maximum allowable data size through a fourth message.

In the first aspect, the step (A) can include the steps of: transmitting, at the mobile station, a first message to the radio base station, when transitioning from a detached state to an attached state; transmitting, at the radio base station, a second message to a mobility control device performing mobility control on the mobile station, when receiving the first message; determining, at the mobility control device, the maximum allowable data size, and notifying the radio base station of the maximum allowable data size through a third message, when receiving the second message; and notifying, from the radio base station to the mobile station, the maximum allowable data size through a fourth message.

In the first aspect, in the step (A), the radio base station can notify the mobile station of the maximum allowable data size, when detecting that an amount of processing executed by a wired transmission data processing card has exceeded a predetermined threshold.

In the first aspect, in the step (A), a single size can be determined as the maximum allowable data size for the uplink user IP packet to be transmitted over all bearers established between the mobile station and a gateway.

A second aspect of the present invention is summarized as a transmission method for transmitting a user IP packet, the transmission method including the steps of: (A) determining, at a management device, a maximum allowable data size for the uplink user IP packet in accordance with a type of a transmission path in a network, and notifying the mobile station of the maximum allowable data size; (B) generating, at the mobile station, an upper layer data unit which size is not more than the notified maximum allowable data size; (C) generating, at the mobile station, an uplink user IP packet including the generated upper layer data unit, generating radio communication data including the generated uplink user IP packet, and transmitting the radio communication data to the radio base station; and (D) generating, at the radio base station, wired transmission data including the uplink user IP packet, and transmitting the wired transmission data to an upper node, wherein the radio base station transmits the wired transmission data to the upper node without executing IP fragmentation processing thereon, the wired transmission data including the uplink user IP packet which size is not more than the maximum allowable data size.

In the second aspect, in the step (A), the management device can determine a single size as the maximum allowable data size for the uplink user IP packet to be transmitted over all bearers established between the mobile station and a gateway.

A third aspect of the present invention is summarized as a mobile station configured to transmit an uplink user IP packet to a radio base station, the mobile station including: an upper layer processor section configured to generate, when notified of a maximum allowable data size for the uplink user IP packet, the upper layer data unit which size is not more than the notified maximum allowable data size; and a data transmitter section configured to generate an uplink user IP packet including the generated upper layer data unit, to generate radio communication data including the generated uplink user IP packet, and to transmit the radio communication data to the radio base station, wherein the radio base station is configured to transmit wired transmission data to an upper node without executing IP fragmentation processing thereon, the wired transmission data including the uplink user IP packet which size is not more than the maximum allowable data size.

A fourth aspect of the present invention is summarized as a radio base station including: an IP packet processing card configured to receive an uplink user IP packet including an upper layer data unit from a mobile station, to generate wired transmission data including the upper layer data unit, and to transmit the wired transmission data to an upper node; and a notification section configured to notify the mobile station of a maximum allowable data size for the uplink user IP packet, wherein when the notification of the maximum allowable data size for the uplink user IP packet has been given, the IP packet processing card is configured to transmit wired transmission data including the upper layer data unit to the upper node without executing IP fragmentation processing thereon.

In the fourth aspect, the IP packet processing card can be configured to determine the maximum allowable data size for the uplink user IP packet, when detecting that an amount of processing executed by the IP packet processing card has exceeded a predetermined threshold; and the notification section can be configured to notify the mobile station of the maximum allowable data size for the uplink user IP packet determined by the IP packet processing card.

As described above, according to the present invention, it is possible to provide the method of transmitting an uplink user IP packet and the mobile station which are capable of efficiently searching out an MTU size supportable in the transmission paths between the mobile station UE 70 and the application server 10.

### BRIER DESCRIPTION OF THE DRAWING

[Fig. 1] Fig. 1 is a diagram for explaining a conventional radio communication system.
[Fig. 2] Fig. 2 is an overall block diagram of a radio communication system according to a first embodiment of the present invention.
[Fig. 3] Fig. 3 is a diagram showing a protocol configuration in the radio communication system according to the first embodiment of the present invention.
[Fig. 4] Fig. 4 is a functional block diagram of a radio base station according to the first embodiment of the present invention.
[Fig. 5] Fig. 5 is a functional block diagram of a mobile station according to the first embodiment of the present invention.
[Fig. 6] Fig. 6 is a sequence diagram showing operations of the radio communication system according to the first embodiment of the present invention.
[Fig. 7] Fig. 7 is a sequence diagram showing operations of the radio communication system according to the first embodiment of the present invention.

### BEST MODE FOR CARRYING OUT THE INVENTION

### (Configuration of Radio Communication System according to First Embodiment of the Present Invention)

A description is given of a configuration of a radio communication system according to a first embodiment of the present invention with reference to Figs. 2 to 5.

As shown in Fig. 2, the radio communication system according to this embodiment includes an application server 10, a PDN gateway (PDN-GW: Public Data Network-Gateway) 20, an MME 30, an S-GW 40, an OAM (Operation and Maintenance) server 50 and a radio base station (eNB) 60.

A UE 70 is configured to transmit radio communication data to the eNB 60, and to receive radio communication data from the eNB 60, via one or multiple radio bearers (radio channels) established with the eNB 60.

In addition, the UE 70 is configured to establish one or multiple SAE (System Architecture) bearers with the PDN-GW 20.

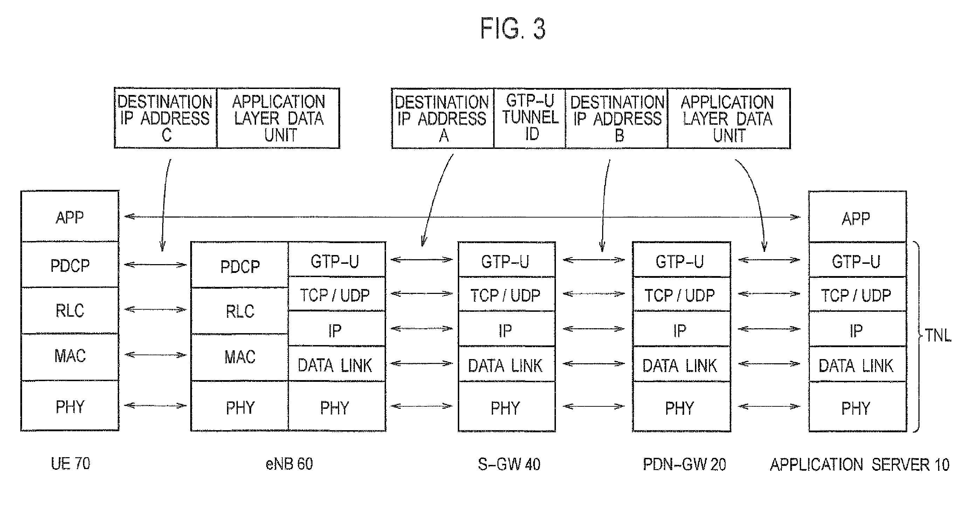

The application server 10 is configured to generate and transmit a downlink user IP packet. Fig. 3 shows a protocol stack of the application server 10.

As shown in Fig. 3, the application server 10 is configured to generate a downlink user IP packet including an application layer (upper layer) data unit, to generate wired transmission data (IP packet) including the generated downlink user IP packet, and to transmit the wired transmission data to the PDN-GW 20.

Specifically, the application server 10 is configured to provide the IP address of the UE 70 as a destination IP address B to the application layer data unit thus generated in its application layer.

Moreover, the application server 10 is configured to provide a GTP-U tunnel header to the application layer data unit which is provided with the destination IP address B, in its GTP-U layer, the GTP-U tunnel header including a GTP-U tunnel ID for identifying a GTP-U tunnel having been established between the application server 10 and the PDN-GW.

Thereafter, the application server 10 is configured to generate a downlink user IP packet by providing the application layer data unit with an IP header including the IP address of the PDN-GW 20 as a destination IP address A, in its IP layer, and to transmit the downlink user IP packet to the PDN-GW 20 via its data link layer and physical (PHY) layer.

Here, a GTP-U layer, a UDP layer, an IP layer, a data link layer and a physical layer in a wired transmission path are collectively called a transport network layer (TNL).

The PDN-GW 20 is a device serving as a gateway between an IP transport network including the MME 30 and S-GW, and a public data network (PDN). Additionally, the PDN-GW 20 includes a protocol stack as shown in Fig. 3.

Note that, "Giga Ethernet (registered trademark)" is assumed to be used as a data link layer protocol in a transmission path included in the IP transport network.

The MME 30 is a device configured to perform mobility control on the UE 70. In addition, the MME 30 includes a protocol stack as shown in Fig. 3.

The MME 30 may be configured to determine an MTU size (maximum allowable data size) for uplink user IP packets in accordance with the type of transmission path connected to each eNB 60, and to notify the UE 70 of the MTU size through an RRC (Radio Resource Control) message.

Here, the MME 30 is configured to determine one MTU size for uplink user IP packets to be transmitted over SAE bearers (bearers) established between the UE 70 and the PDN-GW 20 (gateway).

In other words, a single MTU size is assumed to be allocated to uplink user IP packets which are to be transmitted over all the SAE bearers and each of which includes an application layer data unit.

Further, the MME 30 may be configure to notify the UE 70 of the MTU size for uplink user IP packets each including an application layer data unit through an RRC message, the MTU size being determined by the eNB 60 or the OAM server 60.

Furthermore, the MME 30 may define the MTU size for uplink user TIP packets each including an application layer data unit as a NAS (Non-Access Stratum) information element, and notify the UE 70 of the MTU size through NAS signaling, the MTU size being determined by the OAM server 60. In this case, specifically, a NAS message including the MTU size is delivered to the eNB as an S1-AP message. Then, the eNB transmits the NAS message to the UE transparently without processing the NAS message.

The S-GW 40 is a gateway connected to the PDN-GW 20, the MME, 30 and the eNB 60. Moreover, the S-GW 40 includes a protocol stack as shown in Fig. 3.

The OAM server 50 is a management device for managing the PDN-GW 20, the MME 30, the S-GW 40 and the eNB 60.

The OAM server 50 is configured to determine an MTU size for uplink user IP packets in accordance with the type of transmission path in a network (PLMN: Public Land Mobile Network), and to notify the UE 70 of the MTU size.

To be more specific, the OAM server 50 is configured to search for the smallest MTU size among MTU sizes for uplink user IP packets in transmission paths connected to the eNBs 60 in the PLMN, and to determine that the smallest MTU size thus searched out is the aforementioned MTU size for the uplink user IP packets each including an application layer data unit.

Here, the ORM server 50 is configured to determine one MTU size for uplink user IP packets to be transmitted over SAE bearers (bearers) established between the UE 70 and the PDN-GM 20 (gateway).

In other words, a single MTU size is assumed to be allocated to uplink user IP packets to be transmitted over all the SAE bearers.

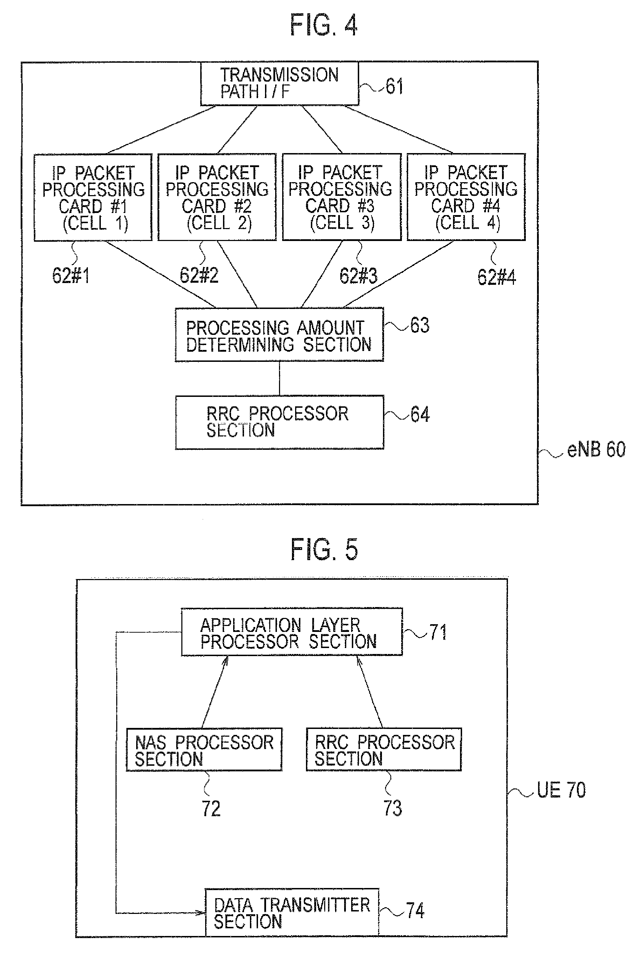

As shown in Fig. 4, the eNB 60 includes a transmission path interface 61, multiple IP packet processing cards 62#1 to 62#4, a processing amount determining section 63 and an RRC processor section 64. Note that, the eNB 60 includes a protocol stack as shown in Fig. 3.

The transmission path interface 61 includes both a transmission path interface for the S-GW 40, and a transmission path interface for the UE 70 existing in each cell.

The IP packet processing cards 62 correspond to the respective cells managed by the eNB 60, and are each configured to execute processing (such as IP fragmentation processing and IP assembling processing) on IP packets (wired transmission data) in the IP layer.

Each IP packet processing card 62 is configured to determine an MTU size for uplink user IP packets and to notify the RRC processor section 64 of the MTU size, when the processing amount determining section 63 detects that the amount of processing executed by the IP packet processing card 62 has exceeded a predetermined threshold.

For example, each IP packet processing card 62 may be configured to determine an MTU size for uplink user IP packets and to notify the RRC processor section 64 of the MTU size, when the processing amount determining section 63 detects that the amount of IP assembling processing executed on IP packets (wired transmission data) by the IP packet processing card 62 has exceeded the predetermined threshold.

The RRC processor section 64 is configured to notify the UE 70 of the MTU size for uplink user IP packets through an RRC message, the MTU size having been notified by the corresponding IP packet processing card 62.

As shown in Fig. 5, the UE 70 includes an application layer processor section 71, a NAS processor section 72, an RRC processor section 73 and a data processor section 74. Note that, the UE 70 includes a protocol stack as shown in Fig. 3.

The application layer processor section 71 is configured to generate an application layer data unit when an MTU size for uplink user IP packets is notified by the NAS processor section 72 or the RRC processor section 73, the application layer data unit having a size equal to or smaller than the notified MTU size.

The NAS processor section 72 is configured to acquire the MTU size for uplink user IP packets having been notified by the OAM server 50 through NAS signaling.

The RRC processor section 73 is configured to acquire the MTU size for uplink user IP packets having been notified by the eNB 60 through an RRC message.

Here, the eNB 60 is configured to transmit an IP packet (wired transmission data), which includes an uplink user IP packet which size is equal to or smaller than the aforementioned MTU size, to an upper node (S-GW and the like, for example) without executing IP fragmentation processing thereon in its IP layer.

The data processor section 74 is configured to generate an uplink user IP packet including the application layer data unit generated by the application layer processor section 71, to generate radio communication data including the generated uplink user IP packet, and to transmit the radio communication data to the eNB 60 via a radio bearer.

### (Operations of Radio Communication System according to First Embodiment of the Present Invention)

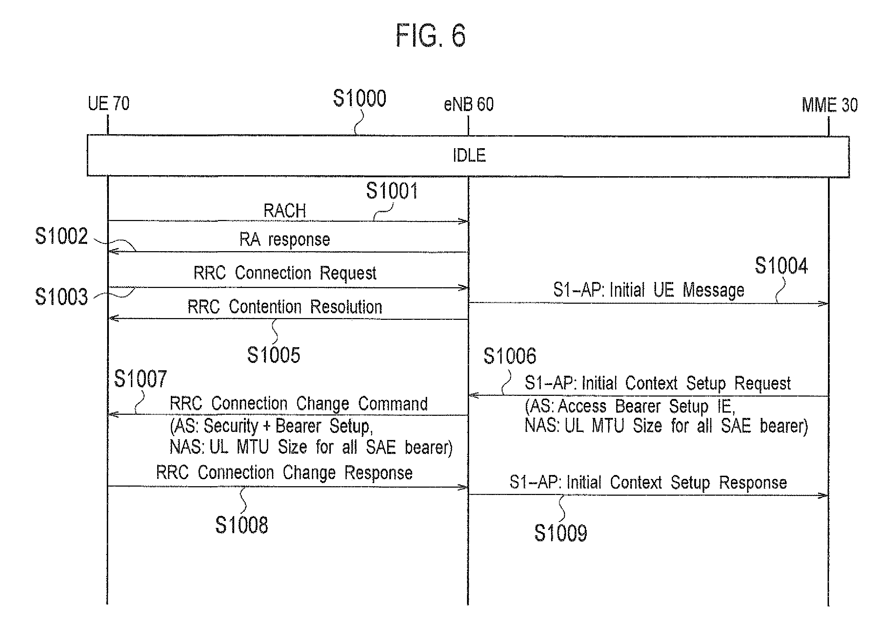

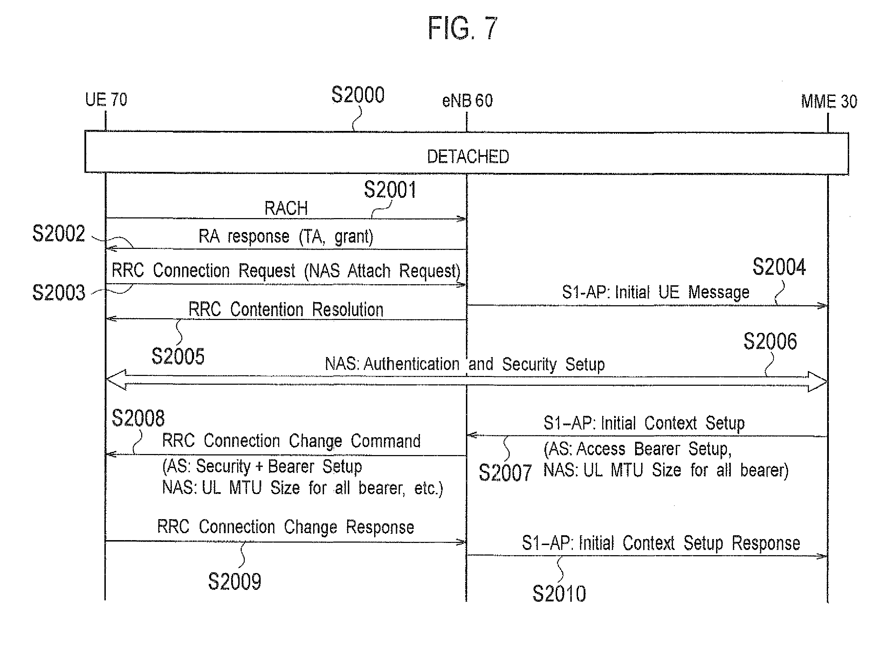

A description is given of operations of the radio communication system according to this embodiment with reference to Figs. 6 and 7.

First, a description is given of operations of the radio communication system according to this embodiment when the UE 70 transitions from its idle state to its active state, with reference to Fig. 6.

As shown in Fig. 6, in Step S1000, the UE 70 is assumed to be in the idle state (communication stop state, for example) .

In Step S1001, when attempting to transition to the active state (communication start state, for example), the UE 70 transmits predetermined information, such as identification information of the UE 70, to the eNB 60 to which the UE 70 is connected, via an RACH (Random Access Channel).

In Step S1002, the eNB 60 transmits an "RACH response" message to the UE 70 in response to the received predetermined information.

In Step S1003, the UE 70 transmits an "RRC Connection Request message (first message)" to the eNB 60.

When receiving the "RRC Connection Request" message, the eNB 60 transmits an "S1-AP message (Initial UE Message) (second message)" to the MME 30 performing mobility control on the UE 70 in Step S1004, and transmits an "RRC Contention Resolution message" to the UE 70 in Step S1005.

When receiving the "S1-AP message (Initial UE Message)", in Step S1006, the MME 30 determines an MTU size for uplink user IP packets and transmits an "S1-AP message (Initial Context Setup Request) (third message)" including "AS: Access Bearer Setup IE" and "NAS: UL MTU Size for all SAE bearer" to the eNB 60.

Here, through "NAS: UL MTU Size for all SAE bearer", the MME 30 notifies the eNB 60 of the aforementioned MTU size for uplink user IP packets not over an individual SAE bearer but over all SAE bearers.

In Step S1007, the eNB 60 transmits an "RRC Connection Change Command message (fourth message)" including "AS: Security + Bearer Setup" and "NAS : UL MTU Size for all SAE bearer", to the UE 70.

Here, through "NAS: UL MTU Size for all SAE bearer", the eNB 60 notifies the UE 70 of the aforementioned MTU size for uplink user IP packets not over an individual SAE bearer but over all SAE bearers.

In Step S1008, the UE 70 transmits an "RRC Connection Change Response message" to the eNB 60.

In Step S1009, the eNB 60 transmits an "S1-AP message (Initial Context Setup Response)" to the MME 30.

Thereafter, the UE 70 generates an application layer data unit which size is equal to or smaller than the notified "MTU size for uplink user IP packets in its application layer, generates an uplink user IP packet including the application layer data unit without executing IP fragmentation processing thereon in its IP layer, and then transmits radio communication data including the uplink user IP packet via its data link layer and physical layer.

Then, the eNB 60 extracts the uplink user IP packet included in the received radio communication data, generates an uplink user IP packet including the application layer data unit without executing IP fragmentation processing thereon in its IP layer, and then transmits wired transmission data including the uplink user IP packet to an upper node (S-GW, for example) via its data link layer and physical layer.

Second, a description is given of operations of the radio communication system according to this embodiment when the UE 70 transitions from its detached state to its attached state, with reference to Fig. 7.

As shown in Fig. 7, in Step S2000, the UE 70 is assumed to be in the detached state (power-off state, for example).

In Step S2001, when attempting to transition to the attached state (power-on state, for example), the UE 70 transmits predetermined information, such as identification information of the UE 70, to the eNB 60 to which the UE 70 is connected, via an RACH (Random Access Channel).

In Step S2002, the eNB 60 transmits an "RANCH response" message (TA, grant) to the UE 70 in response to the received predetermined information.

In Step S2003, the UE 70 transmits an "RRC Connection Request message (NAS Attach Request) (first message)" to the eNB 60.

When receiving the "RRC Connection Request" message, the eNB 60 transmits an "S1-AP message (Initial UE Message) (second message)" to the MME 30 performing mobility control on the UE 70 in Step S2004, and transmits an "RRC Contention Resolution message" to the UE 70 in Step S2005.

In Step S2006, "Activation and Security Setup" processing is executed between the UE 70 and the MME 30 through NAS signaling.

When receiving the "S1-AP message (Initial UE Message)", in Step S2007, the MME 30 determines an MTU size for uplink user IP packets and transmits an "S1-AP message (Initial Context Setup Request) (third message)" including "AS: Access Bearer Setup IE" and "NAS: UL MTU Size for all SAE bearer" to the eNB 60.

Here, through "NAS: UL MTU Size for all SAE bearer", the MME 30 notifies the eNB 60 of the aforementioned MTU size for uplink user IP packets not over an individual SAE bearer but over all SAE bearers.

In Step S2008, the eNB 60 transmits an "RRC Connection Change Command message (fourth message)" including "AS: Security + Bearer Setup" and "NAS: UL MTU Size for all SAE bearer", to the UE 70.

Here, through "NAS: UL MTU Size for all SAE bearer", the eNB 60 notifies the UE 70 of the aforementioned MTU size for uplink user IP packets not over an individual SAE bearer but over all SAE bearers.

In Step S2009, the UE 70 transmits an "RRC Connection Change Response message" to the eNB 60.

In Step S2010, the eNB 60 transmits an "S1-AP message (Initial Context Setup Response)" to the MME 30.

Thereafter, the UE 70 generates an application layer data unit which size is equal to or smaller than the notified MTU size for uplink user IP packets in its uplink IP layer, generates an uplink user IP packet including the application layer data unit without executing IP fragmentation processing thereon in its IP layer, and then transmits radio communication data including the uplink user IP packet via its data link layer and physical layer.

Then, the eNB 60 extracts the uplink user IP packet included in the received radio communication data and the application layer data unit included in the uplink user data, generates an uplink user IP packet including the application layer data unit without executing IP fragmentation processing thereon in its IP layer, and then transmits wired transmission data including the uplink user IP packet to an upper node (S-GW, for example) via its data link layer and physical layer.

### (Operation and Effect of Radio Communication System according to First Embodiment of the Present Invention)

According to the radio communication system of this embodiment, the UE 70 is configured to generate an application layer data unit in its application layer in accordance with an MTU size for uplink user IP packets determined and notified by the MME 30, the OAM server 50 and the eNB 60. This eliminates the need for the UE 70 and the application server 10 to search for the aforementioned MTU size, thus enabling efficient transmission of uplink user IP packets.

Further, according to the radio communication system of this embodiment, a single size is notified as the aforementioned MTU size to uplink user IP packets to be transmitted over all SAE bearers. This enables the efficient use of radio resources as compared to the case where one MTU size is notified to uplink user IP packets to be transmitted over each SAE bearer.

Note that each of the above described operations of the UE 70 and the radio base station eNB 60 may be implemented by hardware, a software module executed by a processor, or by a combination of both.

The software module may be provided in a storage medium of an arbitrary form, such as a RAM (Random Access Memory), a flash memory, a ROM (Read Only Memory), an EPROM (Erasable Programmable ROM), an EEPROM (Electronically Erasable Programmable ROM), a register, a hard disk, a removable disk, or a CD-ROM.

Such a storage medium is connected to a processor so that the processor can read information from, and write information into the storage medium. Such a storage medium may be integrated on the processor. Additionally, such a storage medium and such a processor may be provided in an ASIC. Such an ASIC may be provided in each of the mobile station UE and the radio base station eNB. Such a storage medium and such a processor may be provided as discrete components in the mobile station UE and the radio base station eNB.

Although the present invention has been described above in detail by use of the above described embodiment, it is apparent to those skilled in the art that the present invention shall not be limited by the embodiment described in the present description. The present invention can be implemented as an embodiment modified or changed without departing from the spirit and scope of the present invention defined by descriptions in the scope of claims. Accordingly, what is described in the present description are given for the purpose of illustrative explanation, and shall not have any restrictive implication to the present invention.

Note that, the present description of the application incorporates entirety of Japanese Patent Application 2007-214158 (filed on August 20, 2007) by reference.

### INDUSTRIAL APPLICABILITY

As described above, a transmission method and a mobile station according to the present invention are capable of efficiently searching for an MTU size supportable in transmission paths between the mobile station and an application server, and are thus advantageous.

## Claims

1. A transmission method in which a mobile station transmits an uplink user IP packet to a radio base station, the transmission method comprising the steps of:
(A) determining a maximum allowable data size for the uplink user IP packet in accordance with a type of a transmission path connected to the radio base station, and notifying the mobile station of the maximum allowable data size;
(B) generating, at the mobile station, an upper layer data unit which size is not more than the notified maximum allowable data size;
(C) generating, at the mobile station, an uplink user IP packet including the generated upper layer data unit, generating radio communication data including the generated uplink user IP packet, and transmitting the radio communication data to the radio base station; and
(D) generating, at the radio base station, wired transmission data including the uplink user IP packet, and transmitting the wired transmission data to an upper node, wherein
the radio base station transmits the wired transmission data to the upper node without executing IP fragmentation processing thereon, the wired transmission data including the uplink user IP packet which size is not more than the maximum allowable data size.

2. The transmission method according to claim 1, wherein the step (A) comprises the steps of:
transmitting, at the mobile station, a first message to the radio base station connected to the mobile station, when transitioning from an idle state to an active state;
transmitting, at the radio base station, a second message to a mobility control device performing mobility control on the mobile station, when receiving the first message;
determining, at the mobility control device, the maximum allowable data size, and notifying the radio base station of the maximum allowable data size through a third message, when receiving the second message; and
notifying, from the radio base station to the mobile station, the maximum allowable data size through a fourth message.

3. The transmission method according to claim 1, wherein the step (A) comprises the steps of:
transmitting, at the mobile station, a first message to the radio base station, when transitioning from a detached state to an attached state;
transmitting, at the radio base station, a second message to a mobility control device performing mobility control on the mobile station, when receiving the first message;
determining, at the mobility control device, the maximum allowable data size, and notifying the radio base station of the maximum allowable data size through a third message, when receiving the second message; and
notifying, from the radio base station to the mobile station, the maximum allowable data size through a fourth message.

4. The transmission method according to claim 1, wherein
in the step (A), the radio base station notifies the mobile station of the maximum allowable data size, when detecting that an amount of processing executed by a wired transmission data processing card has exceeded a predetermined threshold.

5. The transmission method according to claim 1, wherein
in the step (A), a single size is determined as the maximum allowable data size for the uplink user IP packet to be transmitted over all bearers established between the mobile station and a gateway.

6. A transmission method for transmitting a user IP packet, the transmission method comprising the steps of:
(A) determining, at a management device, a maximum allowable data size for the uplink user IP packet in accordance with a type of a transmission path in a network, and notifying the mobile station of the maximum allowable data size;
(B) generating, at the mobile station, an upper layer data unit which size is not more than the notified maximum allowable data size;
(C) generating, at the mobile station, an uplink user IP packet including the generated upper layer data unit, generating radio communication data including the generated uplink user IP packet, and transmitting the radio communication data to the radio base station; and
(D) generating, at the radio base station, wired transmission data including the uplink user IP packet, and transmitting the wired transmission data to an upper node, wherein
the radio base station transmits the wired transmission data to the upper node without executing IP fragmentation processing thereon, the wired transmission data including the uplink user IP packet which size is not more than the maximum allowable data size.

7. The transmission method-according to claim 6, wherein
in the step (A), the management device determines a single size as the maximum allowable data size for the uplink user IP packet to be transmitted over all bearers established between the mobile station and a gateway.

8. A mobile station configured to transmit an uplink user IP packet to a radio base station, the mobile station comprising:
an upper layer processor section configured to generate, when notified of a maximum allowable data size for the uplink user IP packet, the upper layer data unit which size is not more than the notified maximum allowable data size; and
a data transmitter section configured to generate an uplink user IP packet including the generated upper layer data unit, to generate radio communication data including the generated uplink user IP packet, and to transmit the radio communication data to the radio base station, wherein
the radio base station is configured to transmit wired transmission data to an upper node without executing IP fragmentation processing thereon, the wired transmission data including the uplink user IP packet which size is not more than the maximum allowable data size.

9. A radio base station comprising:
an IP packet processing card configured to receive an uplink user IP packet including an upper layer data unit from a mobile station, to generate wired transmission data including the upper layer data unit, and to transmit the wired transmission data to an upper node; and
a notification section configured to notify the mobile station of a maximum allowable data size for the uplink user IP packet, wherein
when the notification of the maximum allowable data size for the uplink user IP packet has been given, the IP packet processing card is configured to transmit wired transmission data including the upper layer data unit to the upper node without executing IP fragmentation processing thereon.

10. The radio base station according to claim 9, wherein
the IP packet processing card is configured to determine the maximum allowable data size for the uplink user IP packet, when detecting that an amount of processing executed by the IP packet processing card has exceeded a predetermined threshold; and
the notification section is configured to notify the mobile station of the maximum allowable data size for the uplink user IP packet determined by the IP packet processing card.
